(19) Europäisches Patentamt
European Patent Office
Office européen des brevets

(11) Veröffentlichungsnummer: **0 280 185 B1**

# (12) EUROPÄISCHE PATENTSCHRIFT

(45) Veröffentlichungstag der Patentschrift: **09.09.92**

(21) Anmeldenummer: **88102331.1**

(22) Anmeldetag: **18.02.88**

(51) Int. Cl.5: **C07C 69/734**, C07C 69/736, C07C 69/618, C07C 69/65, A01N 37/10

## (54) Substituierte Crotonsäureester und diese enthalende Fungizide.

(30) Priorität: **20.02.87 DE 3705389**

(43) Veröffentlichungstag der Anmeldung:
**31.08.88 Patentblatt 88/35**

(45) Bekanntmachung des Hinweises auf die Patenterteilung:
**09.09.92 Patentblatt 92/37**

(84) Benannte Vertragsstaaten:
**AT BE CH DE ES FR GB GR IT LI NL SE**

(56) Entgegenhaltungen:
**EP-A- 0 178 826**
**EP-A- 0 203 608**

(73) Patentinhaber: **BASF Aktiengesellschaft**
**Carl-Bosch-Strasse 38**
**W-6700 Ludwigshafen(DE)**

(72) Erfinder: **Wenderoth, Bernd, Dr.**
**Schwalbenstrasse 26**
**W-6840 Lampertheim(DE)**
Erfinder: **Sauter, Hubert, Dr.**
**Neckarpromenade 20**
**W-6800 Mannheim 1(DE)**
Erfinder: **Ammermann, Eberhard, Dr.**
**Sachsenstrasse 3**
**W-6700 Ludwigshafen(DE)**
Erfinder: **Pommer, Ernst-Heinrich, Dr.**
**Berliner Platz 7**
**W-6703 Limburgerhof(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Crotonsäureesterderivate, ihre Herstellung und ihre Verwendung als Fungizide.

Es ist bekannt, N-Tridecyl-2,6-dimethylmorpholin oder seine Salze, z.B. das Acetat, als Fungizide zu verwenden (DE 1 164 152, 1 173 722). Ihre Wirkung ist jedoch in manchen Fällen ungenügend.

Weiterhin ist bekannt, daß einige substituierte Acrylsäureesterderivate fungizide Eigenschaften haben (EP 178 826, DE 35 19 282.8, DE 35 19 280.1)

Es wurde nun gefunden, daß neue Crotonsäureesterderivate der Formel I

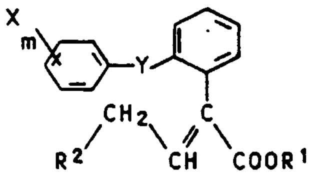

(I),

in der

- $R^1$ $C_1$-$C_5$-Alkyl,
- $R^2$ Wasserstoff, $C_1$-$C_4$-Alkyl, $C_1$-$C_4$-Alkoxy,
- X gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff,
- m 1 bis 5 und
- Y Methylenoxy, Oxymethylen, Ethylen, Ethenylen, Ethinylen oder Sauerstoff bedeutet,

neben einer sehr hohen fungitoxischen Wirkung auch eine sehr gute Pflanzenverträglichkeit besitzen.

Die neuen Verbindungen der Formel I fallen bei ihrer Herstellung aufgrund der C = C-Doppelbindung als E/Z-Isomerengemische an, die in üblicher Weise, z.B. durch Kristallisation oder Chromatographie, in die einzelnen Komponenten getrennt werden können. Sowohl die einzelnen isomeren Verbindungen als auch ihre Gemische werden von der Erfindung umfaßt.

X ist bevorzugt Wasserstoff, 2-Fluor-, 3-Fluor-, 4-Fluor, 2-Chlor-6-fluor-, 2-Chlor-, 3-Chlor-, 4-Chlor-, 2-Brom-, 3-Brom-, 4-Brom-, 2,4-Dichlor-, 2,6-Dichlor-, 3,5-Dichlor-, 2,4,6-Trichlor, 2-Chlor-4-methyl-, 2-Methyl-4-chlor-, 2-Methyl-, 3-Methyl-, 4-Methyl-, 4-Ethyl-, 4-Isopropyl-, 4-tert.-Butyl-, 2,4-Dimethyl-, 2,6-Dimethyl-, 2,4,6-Trimethyl-, 2-Methoxy-4-methyl-, 4-Methoxy-2-methyl, 2-Methoxy-, 3-Methoxy-, 4-Methoxy-, 4-Ethoxy-, 4-Isopropoxy-, 2-Trifluormethyl-, 3-Trifluormethyl-, 4-Trifluormethyl-, 2-Cyano-, 3-Cyano-, 4-Cyano-, 3-Nitro-, 4-Nitro-, 4-Phenyl, 4-Benzyloxy-, 4-Phenoxy, Halogenphenoxy, 4-(2-Chlor)-phenoxy-, 4-(2,4-Dichlor)-phenoxy-, $C_1$-$C_4$-Alkylphenoxy, 4-(2-Methyl)-phenoxy-, 3-Benzyloxy-, Halogen-benzyloxy-, 3-(2-Chlor)-benzyloxy-, 3-(2,4-Dichlor)-benzyloxy-, 3-(2-Fluor)-benzyloxy-, 3-(4-Brom)-benzyloxy-, $C_1$-$C_4$-Alkylbenzyloxy-, 3-(2-Methyl)-benzyloxy-, 3-Phenoxy-, 3-(2-Chlor)-phenoxy-, 3-(2,4-Dichlor)-phenoxy-, 3-(2-Fluor)-phenoxy-, 3-(4-Brom)-phenoxy, 3-(2-Methyl)-phenoxy-, $R^2$ Wasserstoff, Methyl, Ethyl, Propyl, Butyl, Methoxy, Ethoxy, Isopropoxy, Butoxy, $R^1$ $C_1$-$C_3$-Alkyl, Methyl, Ethyl, i-Propyl und Y eine $-CH_2O-$, $-OCH_2-$, $-CH_2-CH_2-$, $CH = CH-$, $-C{\equiv}C-$Gruppe oder steht für O.

Die neuen Verbindungen lassen sich herstellen, indem man einen α-Ketocarbonsäureester der Formel II,

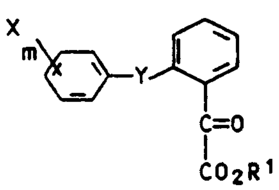

(II),

in der $X_m$, Y und $R^1$ die oben angeführten Bedeutungen haben, in einer Wittig-Reaktion mit einem Alkyl- oder Alkoxymethyltriphenylphosphoniumbromid in Gegenwart einer Base wie z.B. n-Butyllithium, Natriummethylat, Kalium-tert.-butylat oder Natriumhydrid umsetzt (vgl. G. Wittig u. U. Schöllkopf, Org. Synth., Coll. Vol. V, 751-54 (1973)).

Die α-Ketocarbonsäureester der Formel II können z.B. durch die Umsetzung der entsprechenden aromatischen Grignard-Verbindungen mit Imidazoliden der Formel III

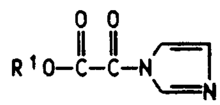

(III),

hergestellt werden (J.S. Nimitz, H.S, Mosher. J. Org. Chem. 1981, 46, 211-213), wobei $R^1$ die oben angeführten Bedeutungen hat.

Die Herstellung der neuen Verbindungen der Formel I wird durch folgendes Beispiel erläutert.

Herstellungsbeispiel

a) Herstellung von 2-(Benzyloxy)-phenylglyoxylsäuremethylester

0,1 mol der aus 1-Benzyloxy-2-brombenzol und Magnesiumspänen in Tetrahydrofuran hergestellten Grignard-Verbindung werden unter Stickstoff bei -50 °C zu 14,6 g (95 mmol) Methyloxalylimidazol in Tetrahydrofuran langsam zugetropft. Über einen Zeitraum von 4 Stunden läßt man die Mischung langsam auf Raumtemperatur (20 °C) kommen. Man gießt sie auf Eiswasser und extrahiert mehrmals mit Ether. Die vereinigten Etherphasen werden neutral gewaschen und getrocknet. Nach dem Abdampfen des Lösungsmittels wird das Produkt mit n-Pentan zur Kristallisation gebracht. Man erhält 16 g (62 %) farblose Kristalle der oben genannten Verbindung.
$^1$H-NMR ($CDCl_3$): δ = 3,35(S, 3H), 5,07(S, 2H), 7,05(m, 2H) 7,40(m, 5H), 7,55(m, 1H), 7,90(m, 1H).

b) Herstellung von 2-[2-(Benzyloxy)-phenyl]-crotonsäuremethylester (Verbindung Nr. 83)

18,5 g (50 mmol) Ethyltriphenylphosphoniumbromid werden in 100 ml absolutem Tetrahydrofuran vorgelegt und bei 0 °C unter Stickstoff langsam mit 32 ml (50 mmol) einer 1,6 molaren Lösung von n-Butyllithium in Hexan versetzt. Nach 30 Minuten Rühren werden bei 0 °C 13,5 g (50 mmol) 2-(Benzyloxy)-phenylglyoxylsäuremethylester in 25 ml absolutem Tetrahydrofuran zugetropft. Es wird 16 Stunden bei Raumtemperatur gerührt. Nach dem Einengen wird der verbleibende Rückstand in Dichlormethan aufgenommen und mehrmals mit Wasser gewaschen. Nach dem Trocknen über $Na_2SO_4$ wird das Lösungsmittel abgedampft. Das so erhaltene Rohprodukt wird durch Chromatographie (Cyclohexan/Essigester = 9/1) gereinigt. Man erhält 8,0 g (57 %) des Crotonsäuremethylesters (trans/cis-Verhältnis = 9/1) als Öl.
$^1$H-NMR ($CDCl_3$): δ = 1,75/2,12 (2xd, 3H), 3,57/3,64 (2xs, 3H), 5,10(S, 2H), 6,30/6,90 (2xq, 1H), 6,95-7,80 (m,9H).

Unter entsprechender Abwandlung der vorstehenden Angaben können die in der folgenden Tabelle aufgeführten Verbindungen synthetisiert werden.

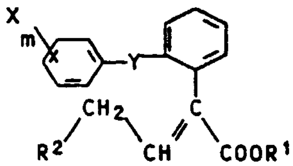

(I)

| Verb.-Nr. | $X_m$ | Y | $R^1$ | $R^2$ | IR($cm^{-1}$) |
|---|---|---|---|---|---|
| 1 | H | $-CH_2-CH_2-$ | $CH_3$ | H | |
| 2 | 2-F | $-CH_2-CH_2-$ | $CH_3$ | H | |
| 3 | 3-F | $-CH_2-CH_2-$ | $CH_3$ | H | |
| 4 | 4-F | $-CH_2-CH_2-$ | $CH_3$ | H | |
| 5 | 2-Cl, 6-F | $-CH_2-CH_2-$ | $CH_3$ | H | |
| 6 | 2-Cl | $-CH_2-CH_2-$ | $CH_3$ | H | |
| 7 | 3-Cl | $-CH_2-CH_2-$ | $CH_3$ | H | |
| 8 | 4-Cl | $-CH_2-CH_2-$ | $CH_3$ | H | |
| 9 | 2-Br | $-CH_2-CH_2-$ | $CH_3$ | H | |
| 10 | 3-Br | $-CH_2-CH_2-$ | $CH_3$ | H | |
| 11 | 4-Br | $-CH_2-CH_2-$ | $CH_3$ | H | |
| 12 | 2,4-$Cl_2$ | $-CH_2-CH_2-$ | $CH_3$ | H | |
| 13 | 2,6-$Cl_2$ | $-CH_2-CH_2-$ | $CH_3$ | H | |
| 14 | 3,5-$Cl_2$ | $-CH_2-CH_2-$ | $CH_3$ | H | |
| 15 | 2,4,6-$Cl_3$ | $-CH_2-CH_2-$ | $CH_3$ | H | |
| 16 | 2-Cl, 4-$CH_3$ | $-CH_2-CH_2-$ | $CH_3$ | H | |
| 17 | 2-$CH_3$, 4-Cl | $-CH_2-CH_2-$ | $CH_3$ | H | |
| 18 | 2-$CH_3$ | $-CH_2-CH_2-$ | $CH_3$ | H | |
| 19 | 3-$CH_3$ | $-CH_2-CH_2-$ | $CH_3$ | H | |
| 20 | 4-$CH_3$ | $-CH_2-CH_2-$ | $CH_3$ | H | |
| 21 | 4-$C_2H_5$ | $-CH_2-CH_2-$ | $CH_3$ | H | |
| 22 | 4-i-$C_3H_7$ | $-CH_2-CH_2-$ | $CH_3$ | H | |
| 23 | 4-t-$C_4H_9$ | $-CH_2-CH_2-$ | $CH_3$ | H | |
| 24 | 2,4-$(CH_3)_2$ | $-CH_2-CH_2-$ | $CH_3$ | H | |
| 25 | 2,6-$(CH_3)_2$ | $-CH_2-CH_2-$ | $CH_3$ | H | |
| 26 | 2,4,6-$(CH_3)_3$ | $-CH_2-CH_2-$ | $CH_3$ | H | |
| 27 | 2-$OCH_3$, 4-$CH_3$ | $-CH_2-CH_2-$ | $CH_3$ | H | |
| 28 | 4-$OCH_3$, 2-$CH_3$ | $-CH_2-CH_2-$ | $CH_3$ | H | |
| 29 | 2-$OCH_3$ | $-CH_2-CH_2-$ | $CH_3$ | H | |

| Verb.-Nr. | $X_m$ | Y | $R^1$ | $R^2$ | IR($cm^{-1}$) |
|---|---|---|---|---|---|
| 30 | 3-$OCH_3$ | $-CH_2-CH_2-$ | $CH_3$ | H | |
| 31 | 4-$OCH_3$ | $-CH_2-CH_2-$ | $CH_3$ | H | |
| 32 | 4-$OC_2H_5$ | $-CH_2-CH_2-$ | $CH_3$ | H | |
| 33 | 4-O-i-$C_3H_7$ | $-CH_2-CH_2-$ | $CH_3$ | H | |
| 34 | 2-$CF_3$ | $-CH_2-CH_2-$ | $CH_3$ | H | |
| 35 | 3-$CF_3$ | $-CH_2-CH_2-$ | $CH_3$ | H | |
| 36 | 4-$CF_3$ | $-CH_2-CH_2-$ | $CH_3$ | H | |
| 37 | 2-CN | $-CH_2-CH_2-$ | $CH_3$ | H | |
| 38 | 4-CN | $-CH_2-CH_2-$ | $CH_3$ | H | |
| 39 | 3-$NO_2$ | $-CH_2-CH_2-$ | $CH_3$ | H | |
| 40 | 4-$NO_2$ | $-CH_2-CH_2-$ | $CH_3$ | H | |
| 41 | 4-$C_6H_5$ | $-CH_2-CH_2-$ | $CH_3$ | H | |
| 42 | H | $-CH=CH-$ | $CH_3$ | H | |
| 43 | 2-F | $-CH=CH-$ | $CH_3$ | H | |
| 44 | 3-F | $-CH=CH-$ | $CH_3$ | H | |
| 45 | 4-F | $-CH=CH-$ | $CH_3$ | H | |
| 46 | 2-Cl, 6-F | $-CH=CH-$ | $CH_3$ | H | |
| 47 | 2-Cl | $-CH=CH-$ | $CH_3$ | H | |
| 48 | 3-Cl | $-CH=CH-$ | $CH_3$ | H | |
| 49 | 4-Cl | $-CH=CH-$ | $CH_3$ | H | |
| 50 | 2-Br | $-CH=CH-$ | $CH_3$ | H | |
| 51 | 3-Br | $-CH=CH-$ | $CH_3$ | H | |
| 52 | 4-Br | $-CH=CH-$ | $CH_3$ | H | |
| 53 | 2,4-$Cl_2$ | $-CH=CH-$ | $CH_3$ | H | |
| 54 | 2,6-$Cl_2$ | $-CH=CH-$ | $CH_3$ | H | |
| 55 | 3,5-$Cl_2$ | $-CH=CH-$ | $CH_3$ | H | |
| 56 | 2,4,6-$Cl_3$ | $-CH=CH-$ | $CH_3$ | H | |
| 57 | 2-Cl, 4-$CH_3$ | $-CH=CH-$ | $CH_3$ | H | |
| 58 | 2-$CH_3$, 4-Cl | $-CH=CH-$ | $CH_3$ | H | |
| 59 | 2-$CH_3$ | $-CH=CH-$ | $CH_3$ | H | |
| 60 | 3-$CH_3$ | $-CH=CH-$ | $CH_3$ | H | |
| 61 | 4-$CH_3$ | $-CH=CH-$ | $CH_3$ | H | |
| 62 | 4-$C_2H_5$ | $-CH=CH-$ | $CH_3$ | H | |
| 63 | 4-i-$C_3H_7$ | $-CH=CH-$ | $CH_3$ | H | |
| 64 | 4-t-$C_4H_9$ | $-CH=CH-$ | $CH_3$ | H | |
| 65 | 2,4-$(CH_3)_2$ | $-CH=CH-$ | $CH_3$ | H | |

| Verb.-Nr. | $X_m$ | Y | $R^1$ | $R^2$ | IR($cm^{-1}$) |
|---|---|---|---|---|---|
| 66 | 2,6-$(CH_3)_2$ | -CH=CH- | $CH_3$ | H | |
| 67 | 2,4,6-$(CH_3)_3$ | -CH=CH- | $CH_3$ | H | |
| 68 | 2-$OCH_3$, 4-$CH_3$ | -CH=CH- | $CH_3$ | H | |
| 69 | 4-$OCH_3$, 2-$CH_3$ | -CH=CH- | $CH_3$ | H | |
| 70 | 2-$OCH_3$ | -CH=CH- | $CH_3$ | H | |
| 71 | 3-$OCH_3$ | -CH=CH- | $CH_3$ | H | |
| 72 | 4-$OCH_3$ | -CH=CH- | $CH_3$ | H | |
| 73 | 4-$OC_2H_5$ | -CH=CH- | $CH_3$ | H | |
| 74 | 4-O-i$C_3H_7$ | -CH=CH- | $CH_3$ | H | |
| 75 | 2-$CF_3$ | -CH=CH- | $CH_3$ | H | |
| 76 | 3-$CF_3$ | -CH=CH- | $CH_3$ | H | |
| 77 | 4-$CF_3$ | -CH=CH- | $CH_3$ | H | |
| 78 | 2-CN | -CH=CH- | $CH_3$ | H | |
| 79 | 4-CN | -CH=CH- | $CH_3$ | H | |
| 80 | 3-$NO_2$ | -CH=CH- | $CH_3$ | H | |
| 81 | 4-$NO_2$ | -CH=CH- | $CH_3$ | H | |
| 82 | 4-$C_6H_5$ | -CH=CH- | $CH_3$ | H | |
| 83 | H | -$CH_2O$- | $CH_3$ | H | 2950, 1717, 1490, 1419, 1259, 1038, 754, 697 |
| 84 | 2-F | -$CH_2O$- | $CH_3$ | H | 2955, 1718, 1495, 1451, 1259, 1234, 1039, 757 |
| 85 | 3-F | -$CH_2O$- | $CH_3$ | H | 2950, 1716, 1488, 1439, 1256, 1039, 753 |
| 86 | 4-F | -$CH_2O$- | $CH_3$ | H | 2950, 1716, 1512, 1260, 1226, 1038, 754 |
| 87 | 2-Cl, 6-F | -$CH_2O$- | $CH_3$ | H | |
| 88 | 2-Cl | -$CH_2O$- | $CH_3$ | H | 2950, 1718, 1492, 1450, 1259, 1033, 752 |
| 89 | 3-Cl | -$CH_2O$- | $CH_3$ | H | 2950, 1716, 1492, 1450, 1259, 1039, 754 |
| 90 | 4-Cl | -$CH_2O$- | $CH_3$ | H | 2950, 1714, 1494, 1438, 1260, 1040, 754 |
| 91 | 2-Br | -$CH_2O$- | $CH_3$ | H | |
| 92 | 3-Br | -$CH_2O$- | $CH_3$ | H | |
| 93 | 4-Br | -$CH_2O$- | $CH_3$ | H | |
| 94 | 2,4-$Cl_2$ | -$CH_2O$- | $CH_3$ | H | |
| 95 | 2,6-$Cl_2$ | -$CH_2O$- | $CH_3$ | H | |
| 96 | 3,5-$Cl_2$ | -$CH_2O$- | $CH_3$ | H | |
| 97 | 2,4,6-$Cl_3$ | -$CH_2O$- | $CH_3$ | H | |
| 98 | 2-$CH_3$, 4-Cl | -$CH_2O$- | $CH_3$ | H | |
| 99 | 2-Cl, 4-$CH_3$ | -$CH_2O$- | $CH_3$ | H | |

| Verb.-Nr. | $X_m$ | Y | $R^1$ | $R^2$ | IR($cm^{-1}$) |
|---|---|---|---|---|---|
| 100 | 2-$CH_3$ | $-CH_2O-$ | $CH_3$ | H | 2960, 1712, 1491, 1448, 1264, 1240, 1034, 762 |
| 101 | 3-$CH_3$ | $-CH_2O-$ | $CH_3$ | H | 2960, 1718, 1494, 1450, 1258, 1239, 1040, 753 |
| 102 | 4-$CH_3$ | $-CH_2O-$ | $CH_3$ | H | 2950, 1718, 1491, 1451, 1260, 1238, 1039, 753 |
| 103 | 4-$C_2H_5$ | $-CH_2O-$ | $CH_3$ | H | |
| 104 | 4-i-$C_3H_7$ | $-CH_2O-$ | $CH_3$ | H | |
| 105 | 4-t-$C_4H_9$ | $-CH_2O-$ | $CH_3$ | H | |
| 106 | 2,4-$(CH_3)_2$ | $-CH_2O-$ | $CH_3$ | H | |
| 107 | 2,6-$(CH_3)_2$ | $-CH_2O-$ | $CH_3$ | H | |
| 108 | 2,4,6-$(CH_3)_3$ | $-CH_2O-$ | $CH_3$ | H | |
| 109 | 2-$OCH_3$, 4-$CH_3$ | $-CH_2O-$ | $CH_3$ | H | |
| 110 | 4-$OCH_3$, 2-$CH_3$ | $-CH_2O-$ | $CH_3$ | H | |
| 111 | 2-$OCH_3$ | $-CH_2O-$ | $CH_3$ | H | |
| 112 | 3-$OCH_3$ | $-CH_2O-$ | $CH_3$ | H | 2950, 1717, 1599, 1493, 1267, 1040, 755 |
| 113 | 4-$OCH_3$ | $-CH_2O-$ | $CH_3$ | H | |
| 114 | 4-$OC_2H_5$ | $-CH_2O-$ | $CH_3$ | H | |
| 115 | 4-O-i-$C_3H_7$ | $-CH_2O-$ | $CH_3$ | H | |
| 116 | 2-$CF_3$ | $-CH_2O-$ | $CH_3$ | H | |
| 117 | 3-$CF_3$ | $-CH_2O-$ | $CH_3$ | H | 2945, 1716, 1493, 1448, 1332, 1260, 1166, 1124 |
| 118 | 4-$CF_3$ | $-CH_2O-$ | $CH_3$ | H | |
| 119 | 2-CN | $-CH_2O-$ | $CH_3$ | H | |
| 120 | 4-CN | $-CH_2O-$ | $CH_3$ | H | |
| 121 | 3-$NO_2$ | $-CH_2O-$ | $CH_3$ | H | |
| 122 | 4-$NO_2$ | $-CH_2O-$ | $CH_3$ | H | |
| 123 | 4-$C_6H_5$ | $-CH_2O-$ | $CH_3$ | H | |
| 124 | H | $-OCH_2-$ | $CH_3$ | H | 2950, 1716, 1598, 1496, 1245, 1036, 754 |
| 125 | 2-F | $-OCH_2-$ | $CH_3$ | H | 2950, 1714, 1505, 1258, 1038, 748 |
| 126 | 2-Cl | $-OCH_2-$ | $CH_3$ | H | 2950, 1715, 1484, 1250, 1061, 1041, 749 |
| 127 | 4-Cl | $-OCH_2-$ | $CH_3$ | H | |
| 128 | 2,4-$Cl_2$ | $-OCH_2-$ | $CH_3$ | H | |
| 129 | 2-$CH_3$, 4-Cl | $-OCH_2-$ | $CH_3$ | H | |
| 130 | 2-$CH_3$ | $-OCH_2-$ | $CH_3$ | H | |
| 131 | 4-$CH_3$ | $-OCH_2-$ | $CH_3$ | H | 2950, 1717, 1510, 1248, 1038, 818, 764 |
| 132 | 4-t-$C_4H_9$ | $-OCH_2-$ | $CH_3$ | H | |

| Verb.-Nr. | $X_m$ | Y | $R^1$ | $R^2$ | IR($cm^{-1}$) |
|---|---|---|---|---|---|
| 133 | 2-$OCH_3$ | $-OCH_2-$ | $CH_3$ | H | |
| 134 | 2-$CF_3$ | $-OCH_2-$ | $CH_3$ | H | |
| 135 | 4-$NO_2$ | $-OCH_2-$ | $CH_3$ | H | |
| 136 | H | Ethinylen | $CH_3$ | H | |
| 137 | 2-F | Ethinylen | $CH_3$ | H | |
| 138 | 2-Cl | Ethinylen | $CH_3$ | H | |
| 139 | 2-Br | Ethinylen | $CH_3$ | H | |
| 140 | 4-Br | Ethinylen | $CH_3$ | H | |
| 141 | 2-$CH_3$ | Ethinylen | $CH_3$ | H | |
| 142 | 4-$CH_3$ | Ethinylen | $CH_3$ | H | |
| 143 | 2-$OCH_3$ | Ethinylen | $CH_3$ | H | |
| 144 | 4-$CF_3$ | Ethinylen | $CH_3$ | H | |
| 145 | 2-$NO_2$ | Ethinylen | $CH_3$ | H | |
| 146 | H | $-CH_2O-$ | $CH_3$ | $CH_3$ | 2970, 1718, 1490, 1449, 1266, 1245, 1042, 753 |
| 147 | H | $-CH_2O-$ | $CH_3$ | $C_2H_5$ | |
| 148 | H | $-CH_2O-$ | $CH_3$ | $C_3H_7$ | |
| 149 | H | $-CH_2O-$ | $CH_3$ | $C_4H_9$ | |
| 150 | H | $-CH_2O-$ | $CH_3$ | $OCH_3$ | |
| 151 | H | $-CH_2O-$ | $CH_3$ | $OC_2H_5$ | |
| 152 | H | $-CH_2O-$ | $CH_3$ | O-i-$C_3H_7$ | |
| 153 | H | $-CH_2O-$ | $CH_3$ | $OC_4H_9$ | |
| 154 | H | $-CH=CH-$ | $C_2H_5$ | $CH_3$ | |
| 155 | H | $-CH_2-CH_2-$ | $C_2H_5$ | $CH_3$ | |
| 156 | H | $-CH=CH-$ | i-$C_3H_7$ | $CH_3$ | |
| 157 | H | $-CH_2-CH_2-$ | i-$C_3H_7$ | $CH_3$ | |
| 158 | H | $-CH=CH-$ | $CH_3$ | $CH_3$ | |
| 159 | H | $-CH_2-CH_2-$ | $CH_3$ | $CH_3$ | |
| 160 | H | O | $CH_3$ | H | |
| 161 | 2-F | O | $CH_3$ | H | |
| 162 | 2-Cl | O | $CH_3$ | H | |
| 163 | 2-Br | O | $CH_3$ | H | |
| 164 | 4-Br | O | $CH_3$ | H | |
| 165 | 4-Cl | O | $CH_3$ | H | |
| 166 | 2-$CH_3$ | O | $CH_3$ | H | |
| 167 | 4-$CH_3$ | O | $CH_3$ | H | |
| 168 | 2-$OCH_3$ | O | $CH_3$ | H | |

| Verb.-Nr. | X m | Y | $R^1$ | $R^2$ | IR($cm^{-1}$) |
|---|---|---|---|---|---|
| 169 | 4—$OCH_3$ | O | $CH_3$ | H | |
| 170 | 4—$C_6H_5$ | O | $CH_3$ | H | |
| 171 | H | —CH=CH— | $CH_3$ | $OCH_3$ | |
| 172 | H | —$CH_2$—$CH_2$— | $CH_3$ | $OCH_3$ | |
| 173 | 4—$OCH_2$—$C_6H_5$ | —CH=CH— | $CH_3$ | H | |
| 174 | 4—$OCH_2$—$C_6H_5$ | —$CH_2$—$CH_2$— | $CH_3$ | H | |
| 175 | 4—$OC_6H_5$ | —CH=CH— | $CH_3$ | H | |
| 176 | 4-$OC_6H_5$ | —$CH_2$—$CH_2$— | $CH_3$ | H | |
| 177 | 4—O—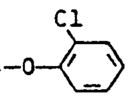 | —$CH_2$—$CH_2$— | $CH_3$ | H | |
| 178 | 4—O—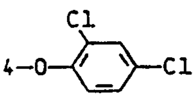 | —$CH_2$—$CH_2$— | $CH_3$ | H | |
| 179 | 4—O—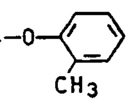 | —$CH_2$—$CH_2$— | $CH_3$ | H | |
| 180 | 3—$OCH_2$—$C_6H_5$ | —$CH_2$—$CH_2$— | $CH_3$ | H | |
| 181 | 3—$OCH_2$—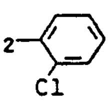 | —$CH_2$—$CH_2$— | $CH_3$ | H | |
| 182 | 3—$OCH_2$—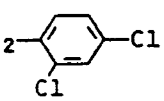 | —$CH_2$—$CH_2$— | $CH_3$ | H | |
| 183 | 3—$OCH_2$—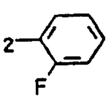 | —$CH_2$—$CH_2$— | $CH_3$ | H | |
| 184 | 3—$OCH_2$—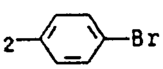 | —$CH_2$—$CH_2$— | $CH_3$ | H | |
| 185 | 3—$OCH_2$—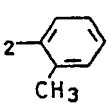 | —$CH_2$—$CH_2$— | $CH_3$ | H | |
| 186 | 3—$OC_6H_5$ | —$CH_2$—$CH_2$— | $CH_3$ | H | |
| 187 | 3—O—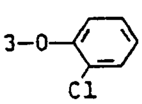 | —$CH_2$—$CH_2$— | $CH_3$ | H | |

| Verb.-Nr. | $X_m$ | Y | $R^1$ | $R^2$ | $IR (cm^{-1})$ |
|---|---|---|---|---|---|
| 188 | 3-O- 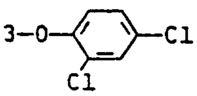 | $-CH_2-CH_2-$ | $CH_3$ | H | |
| 189 | 3-O- 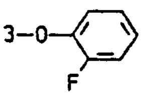 | $-CH_2-CH_2-$ | $CH_3$ | H | |
| 190 | 3-O- 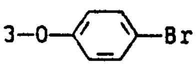 | $-CH_2-CH_2-$ | $CH_3$ | H | |
| 191 | 3-O- 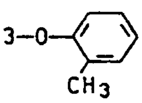 | $-CH_2-CH_2-$ | $CH_3$ | H | |
| 192 | $3-OCH_3$ | $-CH_2O-$ | $CH_3$ | $CH_3$ | 2960, 1716, 1599, 1492, 1267, 1246, 1042, 754 |
| 193 | H | $-OCH_2-$ | $CH_3$ | $CH_3$ | 2960, 1717, 1599, 1496, 1242, 1040, 753 |
| 194 | 2-F | $-OCH_2-$ | $CH_3$ | $CH_3$ | 2950, 1716, 1505, 1258, 1204, 1039, 748 |

Die neuen Verbindungen zeichnen sich, allgemein ausgedrückt, durch eine hervorragende Wirksamkeit gegen ein breites Spektrum von pflanzenpathogenen Pilzen, insbesondere aus der Klasse der Ascomyceten, Phycomyceten und Basidiomyceten, aus. Sie sind zum Teil systemisch wirksam und können als Blatt- und Bodenfungizide eingesetzt werden.

Besonders interessant sind die fungiziden Verbindungen für die Bekämpfung einer Vielzahl von verschiedenen Pflanzenkrankheiten an Kulturpflanzen oder ihren Samen, insbesondere Weizen, Roggen, Geste, Hafer, Reis, Mais, Baumwolle, Soja, Kaffee, Zuckerrohr, Obst und Zierpflanzen im Gartenbau, Weinbau sowie Gemüse - wie Gurken, Bohnen und Kürbisgewächse -.

Die neuen Verbindungen sind insbesondere geeignet zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia solani an Baumwolle,
Ustilago-Arten an Getreide und Zuckerrohr,
Venturia inaequalis (Schorf) an Äpfeln,
Septoria nodorum an Weizen,
Pyrenophora teres an Gerste,
Botrytis cinerea (Grauschimmel) an Erdberren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Alternaria solani an Kartoffeln, Tomaten,
Plasmopara viticola an Reben sowie Fusarium- und Verticillium-Arten an verschiedenen Pflanzen.

Die Verbindungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der

wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol, Toluol), chlorierte Aromaten (z.B. Chlorbenzole), Paraffine (z.B. Erdölfraktionen), Alkohole (z.B. Methanol, Butanol), Amine (z.B. Ethanolamin, Dimethylformamid) und Wasser; Trägerstoffe wie natürliche Gesteinsmehle, z.B. Kaoline, Tonerden, Talkum, Kreide und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.% Wirkstoff. Die Aufwandmengen liegen je nach Art des gewünschten Effektes zwischen 0,05 und 3 kg Wirkstoff oder mehr je ha.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise durch Versprühen, Vernebeln, Verstäuben, Verstreuen, Beizen oder Gießen.

Beispiel für solche Zubereitungen sind:

I. Man vermischt 90 Gew.-Teile der Verbindung Nr. 89 mit 10 Gew.-Teilen N-Methyl-α-pyrrolidon und erhält eine Lösung, die zur Anwendung in Form kleinster Tropfen geeignet ist.

II. 20 Gew.-Teile der Verbindung Nr. 100 werden in einer Mischung gelöst, die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure und 5 Gew.-Teilen des Anlagerungsproduktes und 40 Mol Ethylenoxid an 1 Mol Ricinusöl besteht. Durch Ausgießen und feines Verteilen der Lösung in Wasser erhält man eine wäßrige Dispersion.

III. 20 Gew.-Teile der Verbindung Nr. 89 werden in einer Mischung gelöst, die aus 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gew.-Teile der Verbindung Nr. 100 werden in einer Mischung gelöst, die aus 25 Gew.-Teilen Cyclohexanol, 65 Gew.-Teilen einer Mineralölfraktion vom Siedepunkt 210 bis 280 °C und 10 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gew.-Teile der Verbindung Nr. 89 werden mit 3 Gew.-Teilen des Natriumsalzes der Diisobutylnaphthalin-α-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Verbindung Nr. 100 werden mit 97 Gew.-Teilen feinteiligem Kaolin innig vermischt. Man erhält auf diese Weise ein Stäubemittel, das 3 Gew.% des Wirkstoffs enthält.

VII. 30 Gew.-Teile der Verbindung Nr. 89 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gew.-Teile der Verbindung Nr. 100 werden mit 10 Teilen Natriumsalz eines Phenolsulfonsäure-harnstoff-formaldehyd-Kondensates, 2 Teilen Kieselgel und 48 Teilen Wasser innig vermischt. Man erhält eine stabile wäßrige Dispersion. Durch Verdünnen mit Wasser erhält man eine wäßrige Dispersion.

IX. 20 Teile der Verbindung Nr. 89 werden mit 2 Teilen Calciumsalz der Dodecylbenzolsulfonsäure, 8 Teilen Fettalkoholpolyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

Die erfindungsgemäßen Mittel können in diesen Anwendungsformen auch zusammen mit anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Für die folgenden Versuche wurde als Vergleich die bekannten Wirkstoffe N-Tridecyl-2,6-dimethylmorpholin (A) und sein Acetat (B) verwendet.

Anwendungsbeispiel 1

Wirksamkeit gegen Weizenmahltau

Blätter von in Töpfen gewachsenen Weizenkeimlingen der Sorte "Frühgold" wurden mit wäßriger Spritzbrühe, die 80 % Wirkstoff und 20 % Emulgiermittel in der Trockensubstanz enthielt, besprüht und 24 Stunden nach dem Antrocknen des Spritzbelages mit Oidien (Sporen) des Weizenmehltaus (Erysiphe graminis var. tritici) bestäubt. Die Versuchspflanzen wurden anschließend im Gewächshaus bei Temperaturen zwischen 20 und 22 °C und 75 bis 80 % relativer Luftfeuchtigkeit aufgestellt. Nach 7 Tagen wurde das Ausmaß der Mehltauentwicklung ermittelt.

Das Ergebnis des Versuches zeigt, daß die Wirkstoffe Nr. 88, 89, 100, 112, 124, 125, 126, 131, 193 und 194 bei der Anwendung als 0,025 und 0,006 %ige (Gew.%) Spritzbrühe eine bessere fungizide Wirkung (90 %) ziegen als die bekannten Wirkstoffe A und B (70 %).

Anwendungsbeispiel 2

Wirksamkeit gegen Plasmopara viticola

Blätter von Topfreben der Sorte "Müller-Thurgau" wurden mit wäßriger Spritzbrühe, die 80 % Wirkstoff und 20 % Emulgiermittel in der Trockensubstanz enthielt, besprüht. Um die Wirkungsdauer der Wirkstoffe beurteilen zu können, wurden die Pflanzen nach dem Antrocknen des Spritzbelages 8 Tage im Gewächshaus aufgestellt. Erst dann wurden die Blätter mit einer Zoosporenaufschwemmung von Plasmopara viticola (Rebenperonospora) infiziert. Danach wurden die Reben zunächst für 48 Stunden in einer wasserdampfgesättigten Kammer bei 24 °C und anschließend für 5 Tage in einem Gewächshaus mit Temperaturen zwischen 20 und 30 °C aufgestellt. Nach dieser Zeit wurden die Pflanzen zur Beschleunigung des Sporangienträgerausbruches abermals für 16 Stunden in der feuchten Kammer aufgestellt. Dann erfolgte die Beurteilung des Ausmaßes des Pilzausbruches auf den Blattunterseiten.

Das Ergebnis des Versuches zeigt, daß die Wirkstoffe Nr. 85, 88, 89, 90, 100, 102, 112, 124, 125, 126, 131, 193 und 194 bei der Anwendung als 0,05 %ige Spritzbrühe eine gute fungizide Wirkung (90 %) haben.

**Patentansprüche**

**1.** Substituierte Crotonsäureester der Formel I

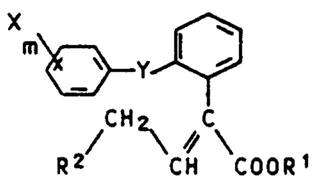

(I),

in der

- $R^1$ $C_1$-$C_5$-Alkyl,
- $R^2$ Wasserstoff, $C_1$-$C_4$-Alkyl, $C_1$-$C_4$-Alkoxy,
- X gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff,
- m 1 bis 5 und
- Y Methylenoxy, Oxymethylen, Ethylen, Ethenylen, Ethinylen oder Sauerstoff bedeutet.

**2.** Verbindungen der Formel I gemäß Anspruch 1 in der X Wasserstoff, 2-Fluor-, 3-Fluor-, 4-Fluor, 2-Chlor-6-fluor-, 2-Chlor-, 3-Chlor-, 4-Chlor-, 2-Brom-, 3-Brom-, 4-Brom-, 2,4-Dichlor-, 2,6-Dichlor-, 3,5-Dichlor-, 2,4,6-Trichlor, 2-Chlor-4-methyl-, 2-Methyl-4-chlor-, 2-Methyl-, 3-Methyl-, 4-Methyl-, 4-Ethyl-, 4-Isopropyl-, 4-tert.-Butyl-, 2,4-Dimethyl-, 2,6-Dimethyl-, 2,4,6-Trimethyl-, 2-Methoxy-4-methyl-,4-Methoxy-2-methyl, 2-Methoxy-, 3-Methoxy-, 4-Methoxy-, 4-Ethoxy-, 4-Isopropoxy-, 2-Trifluormethyl-, 3-Trifluormethyl-, 4-Trifluormethyl-, 2-Cyano-, 3-Cyano-, 4-Cyano-, 3-Nitro-, 4-Nitro-, 4-Phenyl, 4-Benzyloxy-, 4-Phenoxy, Halogenphenoxy, 4-(2-Chlor)-phenoxy-,4-(2,4-Dichlor)-phenoxy-, $C_1$-$C_4$-Alkylphenoxy, 4-(2-Methyl)-phenoxy-, 3-Benzyloxy-, Halogen-benzyloxy-, 3-(2-Chlor)-benzyloxy-, 3-(2,4-Dichlor)-benzyloxy-, 3-(2-Fluor)-benzyloxy-, 3-(4-Brom)-benzyloxy-, $C_1$-$C_4$-Alkylbenzyloxy-, 3-(2-Methyl)-benzyloxy-,3-Phenoxy-, 3-(2-Chlor)-phenoxy-, 3-(2,4-Dichlor)-phenoxy-, 3-(2-Fluor)-phenoxy-, 3-(4-Brom)-phenoxy, 3-(2-Methyl)-phenoxy-, $R^2$ Wasserstoff, Methyl, Ethyl, Propyl, Butyl, Methoxy, Ethoxy, Isopropoxy, Butoxy, $R^1$ $C_1$-$C_3$-Alkyl, Methyl, Ethyl, i-Propyl und Y eine $-CH_2O-$, $-OCH_2-$, $-CH_2-CH_2-$, CH = CH-, -C≡C-Gruppe oder O bedeutet.

**3.** Fungizide Mittel, enthaltend eine Verbindung der Formel I

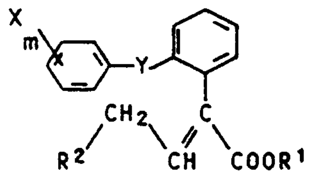

(I),

in der
- $R^1$ $C_1$-$C_5$-Alkyl,
- $R^2$ Wasserstoff, $C_1$-$C_4$-Alkyl, $C_1$-$C_4$-Alkoxy,
- X gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff,
- m 1 bis 5 und
- Y Methylenoxy, Oxymethylen, Ethylen, Ethenylen, Ethinylen oder Sauerstoff bedeutet.

und einen inerten Trägerstoff.

**4.** Verfahren zur Bekämpfung von Pilzen, dadurch gekennzeichnet, daß man eine Verbindung der Formel I

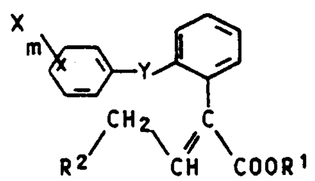

(I),

in der
- $R^1$ $C_1$-$C_5$-Alkyl,
- $R^2$ Wasserstoff, $C_1$-$C_4$-Alkyl, $C_1$-$C_4$-Alkoxy,
- X gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff,
- m 1 bis 5 und
- Y Methylenoxy, Oxymethylen, Ethylen, Ethenylen, Ethinylen oder Sauerstoff bedeutet.

auf diese oder auf durch Pilzbefall bedrohte Flächen, Pflanzen oder Saatgüter einwirken läßt.

**5.** Verfahren zur Herstellung eines fungiziden Mittels, dadurch gekennzeichnet, daß man eine oder mehrere Verbindungen der Formel I gemäß Anspruch 1 mit einem festen oder flüssigen Trägerstoff sowie gegebenenfalls mit einem oder mehreren oberflächenaktiven Mitteln mischt.

**6.** Verbindung der Formel I gemäß Anspruch 1, dadurch gekennzeichnet, daß $R^1$ Methyl, X 3-Chlor, Y $CH_2O$ und $R^2$ H bedeutet.

**7.** Verbindung der Formel I gemäß Anspruch 1, dadurch gekennzeichnet, daß $R^1$ Methyl, X 2-Methyl, Y $CH_2O$ und $R^2$ H bedeutet.

## Claims

**1.** A substituted crotonic ester of the formula I

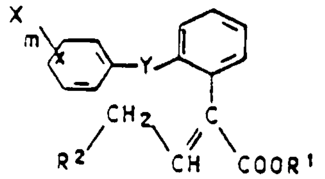

(I)

where $R^1$ is $C_1$-$C_5$-alkyl, $R^2$ is hydrogen, $C_1$-$C_4$-alkyl or $C_1$-$C_4$-alkoxy, X are identical or different substituents selected from the group consisting of halogen, cyano, trifluoromethyl, nitro, $C_1$-$C_4$-alkyl, $C_1$-$C_4$-alkoxy, unsubstituted or substituted phenyl, unsubstituted or substituted phenoxy, unsubstituted or substituted benzyloxy and hydrogen, m is 1 to 5 and Y is methyleneoxy, oxymethylene, ethylene, ethenylene, ethynylene or oxygen.

**2.** A compound of the formula I as claimed in claim 1, wherein X is hydrogen, 2-fluoro, 3-fluoro, 4-fluoro, 2-chloro-6-fluoro, 2-chloro, 3-chloro, 4-chloro, 2-bromo, 3-bromo, 4-bromo, 2,4-dichloro, 2,6-dichloro, 3,5-dichloro, 2,4,6-trichloro, 2-chloro-4-methyl, 2-methyl-4-chloro, 2-methyl, 3-methyl, 4-methyl, 4-ethyl, 4-isopropyl, 4-tert-butyl, 2,4-dimethyl, 2,6-dimethyl, 2,4,6-trimethyl, 2-methoxy-4-methyl, 4-methoxy-2-methyl, 2-methoxy, 3-methoxy, 4-methoxy, 4-ethoxy, 4-isopropoxy, 2-trifluoromethyl, 3-trifluoromethyl, 4-trifluoromethyl, 2-cyano, 3-cyano, 4-cyano, 3-nitro, 4-nitro, 4-phenyl, 4-benzyloxy, 4-phenoxy, halophenoxy, 4-(2-chlorophenoxy), 4-(2,4-dichlorophenoxy), $C_1$-$C_4$-alkylphenoxy, 4-(2-methylphenoxy), 3-benzyloxy, halobenzyloxy, 3-(2-chlorobenzyloxy), 3-(2,4-dichlorobenzyloxy), 3-(2-fluorobenzyloxy), 3-(4-bromobenzyloxy), $C_1$-$C_4$-alkylbenzyloxy, 3-(2-methylbenzyloxy), 3-phenoxy, 3-(2-chlorophenoxy), 3-(2,4-dichlorophenoxy), 3-(2-fluorophenoxy), 3-(4-bromophenoxy) or 3-(2-methylphenoxy), $R^2$ is hydrogen, methyl, ethyl, propyl, butyl, methoxy, ethoxy, isopropoxy or butoxy, $R^1$ is $C_1$-$C_3$-alkyl, methyl, ethyl or isopropyl and Y is $-CH_2O-$, $-OCH_2-$, $-CH_2-CH_2-$, $-CH=CH-$, $-C\equiv C-$ or O.

**3.** A fungicide containing a compound of the formula I

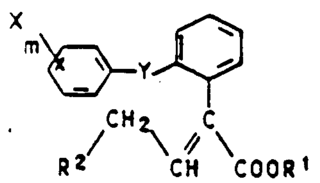

(I)

where $R^1$ is $C_1$-$C_5$-alkyl, $R^2$ is hydrogen, $C_1$-$C_4$-alkyl or $C_1$-$C_4$-alkoxy, X are identical or different substituents selected from the group consisting of halogen, cyano, trifluoromethyl, nitro, $C_1$-$C_4$-alkyl, $C_1$-$C_4$-alkoxy, unsubstituted or substituted phenyl, unsubstituted or substituted phenoxy, unsubstituted or substituted benzyloxy and hydrogen, m is 1 to 5 and Y is methyleneoxy, oxymethylene, ethylene, ethenylene, ethynylene or oxygen, and an inert carrier.

**4.** A method for controlling fungi, wherein a compound of the formula I

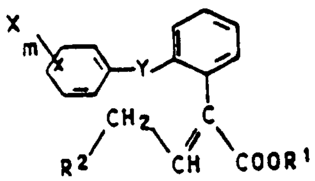

(I)

where $R^1$ is $C_1$-$C_5$-alkyl, $R^2$ is hydrogen, $C_1$-$C_4$-alkyl or $C_1$-$C_4$-alkoxy, X are identical or different substituents selected from the group consisting of halogen, cyano, trifluoromethyl, nitro, $C_1$-$C_4$-alkyl, $C_1$-$C_4$-alkoxy, unsubstituted or substituted phenyl, unsubstituted or substituted phenoxy, unsubstituted or substituted benzyloxy and hydrogen, m is 1 to 5 and Y is methyleneoxy, oxymethylene, ethylene, ethenylene, ethynylene or oxygen, is allowed to act on the fungi or on surfaces, plants or seeds

threatened by fungal attack.

5. A process for the preparation of fungicides, wherein one or more compounds of the formula I as claimed in claim 1 are mixed with a solid or liquid carrier and, if required, with one or more surfactants.

6. A compound of the formula I as claimed in claim 1, wherein $R^1$ is methyl, X is 3-chloro, Y is $CH_2O$ and $R^2$ is H.

7. A compound of the formula I as claimed in claim 1, wherein $R^1$ is methyl, X is 2-methyl, Y is $CH_2O$ and $R^2$ is H.

**Revendications**

1. Esters crotoniques substitués répondant à la formule I

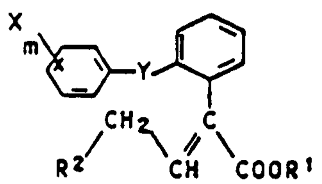

(I),

dans laquelle $R^1$ représente un groupe alkyle en C1-C5,
$R^2$ représente l'hydrogène, un groupe alkyle en C1-C4, alcoxy en C1-C4,
les symboles X ayant des significations identiques ou différentes, représentent chacun un halogène, un groupe cyano, trifluorométhyle, nitro, alkyle en C1-C4, alcoxy en C1-C4, phényle éventuellement substitué, phénoxy éventuellement substitué, benzyloxy éventuellement substitué ou l'hydrogène,
m est un nombre allant de 1 à 5 et
Y représente un groupe méthylène-oxy, oxyméthylène, éthylène, éthénylène, éthynylène ou l'oxygène.

2. Composés de formule I de la revendication 1 dans laquelle X représente l'hydrogène, un substituant 2-fluoro, 3-fluoro, 4-fluoro, 2-chloro-6-fluoro, 2-chloro-, 3-chloro, 4-chloro, 2-bromo, 3-bromo, 4-bromo, 2,4-dichloro, 2,6-dichloro, 3,5-dichloro, 2,4,6-trichloro, 2-chloro-4-méthyle, 2-méthyle, 2-méthyle, 4-méthyle, 4-éthyle, 4-isopropyle, 4-tertbutyle, 2,4-diméthyle, 2,6-diméthyle, 2,4,6-triméthyle, 2-méthoxy-4-méthyle, 4-méthoxy-2-méthyle, 2-méthoxy, 3-méthoxy, 4-méthoxy, 4-éthoxy, 4-isopropoxy, 2-trifluorométhyle, 3-trifluorométhyle, 4-trifluorométhyle, 2-cyano, 3-cyano, 4-cyano, 3-nitro, 4-phényle, 4-benzyloxy, 4-phénoxy, halogénophénoxy, 4-(2-chloro)-phénoxy, 4-(2,4-dichloro)-phénoxy, (alkyle en C1-C4)-phénoxy, 4-(2-méthyl)-phénoxy, 3-benzyloxy, halogénobenzyloxy, 3-(2-chloro)-benzyloxy, 3-(2,4-dichloro)-benzyloxy, 3-(2-fluoro)-benzyloxy, 3-(4-bromo)-benzyloxy, (alkyle en C1-C4)-benzyloxy, 3-(2-méthyl)-benzyloxy, 3-phénoxy, 3-(2-chloro)-phénoxy, 3-(2,4-dichloro)-phénoxy, 3-(fluoro)-phénoxy, 3-(4-bromo)-phénoxy, 3-(2-méthyl)-phénoxy, $R^2$ représente l'hydrogène, un groupe méthyle, éthyle, propyle, butyle, méthoxy, éthoxy, isoporpoxy, butoxy, $R^1$ représente un groupe alkyle en C1-C3, méthyle, éthyle, isopropyle et Y un groupe $-CH_2O-$, $-OCH_2$, $-CH_2CH_2-$, $-CH=CH$, $-C{\equiv}C-$ ou 0.

3. Produit fongicide contenant un composé de formule I

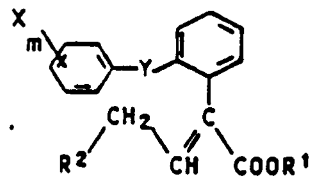

(I),

dans laquelle
$R^1$ représente un groupe alkyle en C1-C5,
$R^2$ représente l'hydrogène, un groupe alkyle en C1-C4, alcoxy en C1-C4,
les symboles X, ayant des significations identiques ou différentes, représentent chacun un halogène, un

groupe cyano, trifluorométhyle, nitro, alkyle en C1-C4, alcoxy en C1-C4, phényle éventuellement substitué, phénoxy éventuellement substitué, benzyloxy éventuellement substitué ou l'hydrogène,
m est un nombre allant de 1 à 5 et
Y représente un groupe méthylène-oxy, oxyméthylène, éthylène, éthénylène, éthynylène ou l'oxygène,
et un véhicule inerte.

4. Procédé pour combattre les mycètes, caractérisé en ce que l'on fait agir sur les mycètes ou sur les surfaces, végétaux ou semences menacés d'une attaque par les mycètes, un composé de formule I

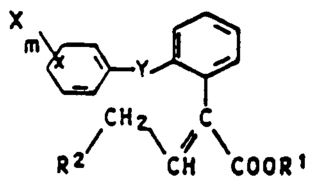

(I),

dans laquelle
$R^1$ représente un groupe alkyle en C1-C5,
$R^2$ représente l'hydrogène, un groupe alkyle en C1-C4, alcoxy en C1-C4,
les divers symboles X, ayant des significations identiques ou différentes, représentent chacun un halogène, un groupe cyano, trifluorométhyle, nitro, alkyle en C1-C4, alcoxy en C1-C4, phényle éventuellement substitué, phénoxy éventuellement substitué, benzyloxy éventuellement substitué ou l'hydrogène,
m est un nombre de 1 à 5 et
Y représente un groupe méthylène-oxy, oxyméthylène, éthylène, éthénylène, éthynylène ou l'oxygène.

5. Procédé de préparation d'un produit fongicide, caractérisé en ce que l'on mélange un ou plusieurs composés de formule I de la revendication 1 avec un véhicule solide ou liquide et le cas échéant un ou plusieurs agents tensio-actifs.

6. Composé de formule I de la revendication 1, caractérisé en ce que $R^1$ représente un groupe méthyle, X un substituant 3-chloro, Y un groupe $CH_2O$ et $R^2$ l'hydrogène.

7. Composé de formule I de la revendication 1, caractérisé en ce que $R^1$ représente un groupe méthyle, X un substituant 2-méthyle, Y un groupe $CH_2O$ et $R^2$ l'hydrogène.